(19) **Europäisches Patentamt**
**European Patent Office**
**Office européen des brevets**

(11) **EP 4 538 323 A1**

(12) **EUROPEAN PATENT APPLICATION**
published in accordance with Art. 153(4) EPC

(43) Date of publication:
**16.04.2025 Bulletin 2025/16**

(21) Application number: **23819827.9**

(22) Date of filing: **06.06.2023**

(51) International Patent Classification (IPC):
*C08L 23/02* (2025.01)   *C08K 3/013* (2018.01)
*C08L 23/08* (2025.01)   *C08L 23/12* (2006.01)
*C08L 23/14* (2006.01)   *C08L 23/26* (2025.01)
*C09J 11/04* (2006.01)   *C09J 123/02* (2006.01)
*C09J 123/08* (2006.01)   *C09J 123/12* (2006.01)
*C09J 123/14* (2006.01)   *C09J 123/26* (2006.01)

(52) Cooperative Patent Classification (CPC):
**C08K 3/013; C08L 23/02; C08L 23/08; C08L 23/12;**
**C08L 23/14; C08L 23/26; C09J 11/04;**
**C09J 123/02; C09J 123/08; C09J 123/12;**
**C09J 123/14; C09J 123/26**

(86) International application number:
**PCT/JP2023/020946**

(87) International publication number:
**WO 2023/238847 (14.12.2023 Gazette 2023/50)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **08.06.2022 JP 2022093160**

(71) Applicant: **TOYOBO MC Corporation**
**Osaka 530-0001 (JP)**

(72) Inventors:
• **MURAKAMI, Yuki**
  **Otsu-shi, Shiga 520-0292 (JP)**
• **IWASHITA, Yuji**
  **Otsu-shi, Shiga 520-0292 (JP)**

(74) Representative: **Müller-Boré & Partner**
**Patentanwälte PartG mbB**
**Friedenheimer Brücke 21**
**80639 München (DE)**

(54) **RESIN COMPOSITION AND HOT MELT ADHESIVE COMPOSITION**

(57)   The object of the present invention is to provide a resin composition having high water vapor barrier property as well as high flowability suitable for low-pressure molding and adhesiveness. A resin composition containing a polyolefin resin (A), an acid-modified polyolefin resin (B), an adhesion-imparting agent (C), and a filler (D), wherein the resin composition contains 10 parts by mass to 50 parts by mass of the adhesion-imparting agent (C) and 1 part by mass to 13 parts by mass of the filler (D), based on a total content of the polyolefin resin (A), the acid-modified polyolefin resin (B), and the adhesion-imparting agent (C) taken as 100 parts by mass, and the filler (D) has a plate shape.

**EP 4 538 323 A1**

**Description**

TECHNICAL FIELD

The present invention relates to a resin composition, more specifically to a resin composition and a hot melt adhesive composition having high flowability, adhesiveness, and a water vapor barrier property.

BACKGROUND ART

Two-component-curing epoxy resins and silicone resins have been generally used as insulating resins for sealing electric and electronic parts used in automobiles and electrical appliance. However, the use of such resins requires a lengthy process and has the risk of breaking electric and electronic parts due to shrinkage stress during curing. Alternatively, sealing of electric and electronic parts with thermoplastic resins by low-pressure molding has recently been known.

Polyester resins have been used as suitable materials for sealing electric and electronic parts from the viewpoint of electrical resistance property, water resistance, durability, and melt viscosity. However, when the polyester resins are molded at a low temperature and a low pressure to reduce damage to electric and electronic parts, the sealing resins often fail to adhere to the electric and electronic parts with sufficient adhesiveness, and the desired electrical resistance property and water resistance are not achieved. Hence, it has been actively studied to add a tackifier having a functional group to a resin to increase adhesiveness (For example, Patent Document 1).

CITATION LIST

PATENT DOCUMENT

Patent Document 1: JP-A-2004-210893

SUMMARY OF THE INVENTION

PROBLEMS TO BE SOLVED BY THE INVENTION

In addition to the physical properties above mentioned, high water vapor barrier property has often been required in electric and electronic parts in recent years. The use of thermoplastic resin containing a tackifier as disclosed in Patent Document 1 can improve adhesiveness but cannot achieve water vapor barrier property. The conventional arts have not yet provided resin compositions for sealing having both of water vapor barrier property and flowability particularly suitable for low-pressure molding.

The present invention has been made against the background of such problems of the conventional arts. It is an object of the present invention to provide a resin composition having high water vapor barrier properties in addition to flowability suitable for low-pressure molding and adhesiveness.

SOLUTION TO THE PROBLEMS

As a result of earnest studies, the present inventors have found that the above problems can be solved by the following means and has completed the present invention. The present invention has the following features.

[1] A resin composition comprising a polyolefin resin (A), an acid-modified polyolefin resin (B), an adhesion-imparting agent (C), and a filler (D), wherein the resin composition comprises 10 parts by mass to 50 parts by mass of the adhesion-imparting agent (C) and 1 part by mass to 13 parts by mass of the filler (D), based on a total content of the polyolefin resin (A), the acid-modified polyolefin resin (B), and the adhesion-imparting agent (C) taken as 100 parts by mass, and the filler (D) has a plate shape.

[2] The resin composition according to [1], wherein the polyolefin resin (A) contains a polypropylene resin and further contains at least one of an ethylene/$\alpha$-olefin copolymer and a propylene/$\alpha$-olefin copolymer.

[3] The resin composition according to [1] or [2], wherein the acid-modified polyolefin resin (B) has a melting point of 100°C or higher.

[4] The resin composition according to any one of [1] to [3], wherein the adhesion-imparting agent (C) has a hydroxyl value of from 1 KOHmg/g to 100 KOHmg/g.

[5] The resin composition according to any one of [1] to [4], wherein the resin composition comprises 49 parts by mass to 70 parts by mass of the polyolefin resin (A) and 1 part by mass to 30 parts by mass of the acid-modified polyolefin resin (B), based on the total content of the polyolefin resin (A), the acid-modified polyolefin resin (B), and the adhesion-imparting agent (C) taken as 100 parts by mass.

[6] A hot melt adhesive composition comprising the resin composition according to any one of [1] to [5].

ADVANTAGEOUS EFFECTS OF THE INVENTION

The resin composition of the present invention has high flowability and adhesiveness as well as high water vapor barrier property. Hence, the use of the resin composition as a sealing material for a product requiring high waterproofness allows the product to have sufficient water vapor barrier property. In particular, the resin composition of the present invention can be used as a hot melt adhesive composition, and is particularly suitable for sealing of electric and electronic parts.

BRIEF DESCRIPTION OF DRAWING

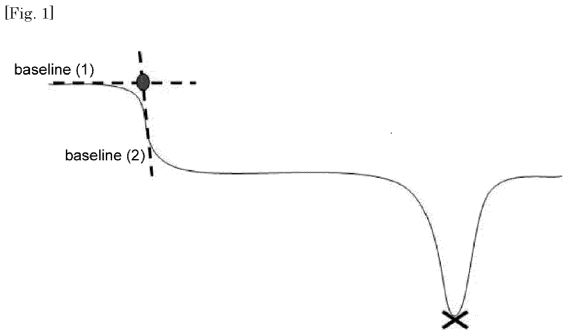

[Fig. 1] Fig. 1 is a schematic diagram illustrating a chart as a result of measurement using a differential scanning calorimeter.

DESCRIPTION OF EMBODIMENTS

Hereinafter, the present invention will be described in detail.

<Polyolefin resin (A)>

The resin composition of the present invention contains a polyolefin resin (A). By containing the polyolefin resin (A), the resin composition can have an excellent water vapor barrier property. The polyolefin resin (A) used in the present invention is not particularly limited, and the polyolefin resin (A) is preferably a polypropylene resin from the viewpoint of water vapor barrier property. The polyolefin resin (A) preferably contains at least one of an ethylene/$\alpha$-olefin copolymer and a propylene/$\alpha$-olefin copolymer from the viewpoint of adhesiveness to metal and film. In order to achieve both of high water vapor barrier property and adhesiveness, the polypropylene resin, the ethylene/$\alpha$-olefin copolymer, and the propylene/$\alpha$-olefin copolymer can be used in combination. The polypropylene resin as used herein is a homopolypropylene formed mainly from a propylene unit; i.e., the polypropylene resin is a resin free from copolymerization components such as $\alpha$-olefin other than propylene or a resin containing very small amount, approximately as small as 1 mol%, of such components even if they are contained. The polyolefin resin (A) is not subjected to acid modification and does not correspond to the acid-modified polyolefin resin (B) described later.

When the polypropylene resin, the ethylene/$\alpha$-olefin copolymer, and/or the propylene/$\alpha$-olefin copolymer (hereinafter, these may be referred to as olefin copolymers) are used in combination, the blending ratio of them (polypropylene resin/olefin copolymers) is preferably from 20/80 to 80/20, more preferably from 30/70 to 70/30, and further preferably from 40/60 to 60/40 by mass ratio.

The resin composition of the present invention contains the polyolefin resin (A) in an amount of preferably 49 parts by mass or more, more preferably 50 parts by mass or more, further preferably 55 parts by mass or more, and preferably 70 parts by mass or less, more preferably 65 parts by mass or less, further preferably 60 parts by mass or less, based on the total content of the polyolefin resin (A), the acid-modified polyolefin resin (B), and the adhesion-imparting agent (C) taken as 100 parts by mass. The content of the polyolefin resin (A) equal to or greater than the above lower limit allows the resin composition to have a high water vapor barrier property easily. The content of the polyolefin resin (A) equal to or lower than the above upper limit allows the resin composition to have high thermal shock resistance.

The polyolefin resin (A) of the present invention preferably has a melt mass-flow rate (hereinafter merely "MFR") measured in accordance with JIS K 7210-1: 2014 (test temperature: 190°C, nominal load: 2.16 kg) of from 10 g/10min to 70 g/10min. When the polyolefin resin (A) has MFR of less than 10 g/10min, too high melt viscosity may reduce the flowability of the resin, resulting in degraded moldability. When the polyolefin resin (A) has MFR of more than 70 g/10min, the resin composition may be softened extremely easily due to too low melt viscosity, leading to inferior mechanical properties. If the polyolefin resin (A) contains several polyolefin resins, each of the polyolefin resins have MFR within the above range.

When the resin composition of the present invention is used as a hot melt adhesive composition, the resin composition is required to melt rapidly at a temperature within 210°C to 240°C to avoid degradation of the resin as much as possible in molding, hence the upper limit of the melting point of the polyolefin resin (A) is desirably 210°C. The upper limit is preferably 200°C or lower, and more preferably 190°C or lower. The lower limit of the melting point is preferably 90°C or higher, more preferably 100°C or higher, further preferably 110°C or higher, and particularly preferably 120°C or higher. The polyolefin resin (A) preferably has a melting point equal to or higher than the heat resisting temperature required depending on applications by 5°C to 10°C. If the polyolefin resin (A) contains several polyolefin resins, each of the polyolefin resins have a melting point within the above range.

<Acid-modified polyolefin resin (B)>

The resin composition of the present invention contains the acid-modified polyolefin resin (B). By containing the acid-modified polyolefin resin (B), the polyolefin resin (A) can have high compatibility with the adhesion-imparting agent (C) and the filler (D), and thus the resin composition can have appropriate flowability, adhesiveness, and a water vapor barrier property. The acid-modified polyolefin resin (B) is not particularly limited and may be a resin having a polyolefin segment and a carboxylic acid segment. Examples of the acid-modified polyolefin resin (B) include ethylene/unsaturated carboxylic acid copolymers such as ethylene/vinyl acetate/maleic anhydride terpolymer and ethylene/ethyl acrylate/-maleic anhydride terpolymer; and polyolefin resins graft-modified with unsaturated carboxylic acid such as polypropylene graft-modified with maleic anhydride and propylene graft-modified with maleic anhydride/$\alpha$-olefin copolymer. Among them, polypropylene modified with maleic anhydride is preferred as the acid-modified polyolefin resin.

The acid-modified polyolefin resin (B) used in the present invention has a melting point of preferably 100°C or higher, more preferably 110°C or higher, further preferably 120°C or higher, and preferably 160°C or lower, more preferably 150°C or lower. The lower limit of the melting point of the acid-modified polyolefin resin (B) equal to or higher than the above lower limit allows the resin composition to have high heat resistance, and the melting point equal to or lower than the above upper limit allows the resin composition to have high flowability during molding.

The resin composition of the present invention contains the acid-modified polyolefin resin (B) in an amount of preferably 1 part by mass or more, more preferably 3 parts by mass or more, and further preferably 5 parts by mass or more, based on the total content of the polyolefin resin (A), the acid-modified polyolefin resin (B), and the adhesion-imparting agent (C) taken as 100 parts by mass. The content is preferably 30 parts by mass or less, more preferably 25 parts by mass or less, and further preferably 20 parts by mass or less. The content of the acid-modified polyolefin resin (B) equal to or greater than the above lower limit allows the polyolefin resin (A) to have high compatibility with the adhesion-imparting agent (C) and the filler (D). The content of the acid-modified polyolefin resin (B) equal to or less than the above upper limit allows the resin composition to have high moldability and mechanical properties.

<Adhesion-imparting agent (C)>

The resin composition of the present invention contains the adhesion-imparting agent (C). By containing the adhesion-imparting agent (C), the resin composition can have high adhesiveness when used as a sealing material, and the flowability of the resin composition can be appropriately increased. The adhesion-imparting agent (C) used in the present invention is not particularly limited, and examples of the adhesion-imparting agent (C) include phenolic compounds, xylene-modified phenolic resins, terpene-modified phenolic resins, and hydrogenated terpene-modified phenolic resins prepared through hydrogenation treatment for terpene-modified phenolic resins. In particular, xylene-modified phenolic resins and terpene-modified phenolic resins are preferred from the viewpoint of compatibility with the polyolefin resin (A).

The adhesion-imparting agent (C) used in the present invention preferably has a hydroxyl group. The adhesion-imparting agent (C) having a hydroxyl group allows the resin composition to have improved wettability to the substrate, increased adhesiveness to the substrate, and enhanced insulating properties. The adhesion-imparting agent (C) has a hydroxyl value of preferably 1 KOHmg/g or more, more preferably 30 KOHmg/g or more, and further preferably 50 KOHmg/g or more. The hydroxyl value is preferably 100 KOHmg/g or less, more preferably 90 KOHmg/g or less, further preferably 80 KOHmg/g or less, and particularly preferably 70 KOHmg/g or less. The hydroxyl value equal to or less than the above upper limit allows the adhesiveness to be increased and the water vapor transmission rate to be maintained at an appropriate value.

The resin composition of the present invention contains the adhesion-imparting agent (C) in an amount of preferably 10 parts by mass or more, and more preferably 20 parts by mass or more, based on the total content of the polyolefin resin (A), the acid-modified polyolefin resin (B), and the adhesion-imparting agent (C) taken as 100 parts by mass. The content of the adhesion-imparting agent (C) is preferably 50 parts by mass or less, more preferably 40 parts by mass or less, and further preferably 30 parts by mass or less. The content of the adhesion-imparting agent (C) within the above range imparts particularly high adhesiveness to the resin composition. In addition, the reduction of flexibility, and the degradation of adhesiveness due to embrittlement of the resin composition can be prevented.

<Filler (D)>

The resin composition of the present invention contains the filler (D). The resin composition can have a high water vapor barrier property by containing the filler (D). The filler (D) used in the present invention is not particularly limited, and examples of the filler (D) include glass beads, calcium carbonate, kaolin, talc, glass fibers, carbon fibers, and clay. As the filler (D) used in the present invention, a platy filler is especially preferred, because the filler having such a shape can improve a water vapor barrier property. The "plate shape" as used herein indicates a filler having a plate-like shape with extremely low height compared to the width and the depth of the filler. The filler (D) preferably has an aspect ratio, which is a ratio of the major axis diameter to the minor axis diameter of the filler (D) (the major axis diameter/the minor axis diameter), of from 3 to 500. The aspect ratio of the filler (D) may be 5 or more, 10 or more, 20 or more, 50 or more, or 100 or more. And the aspect ratio may be 450 or less, 400 or less, 350 or less, 300 or less, or 200 or less. The aspect ratio of the filler (D) can be determined by automatic area measurement of the electron microscope image of the filler (D). Too low aspect ratio of the filler (D) may lower the water vapor barrier property, while too high aspect ratio may worsen dispersity, resulting in decreased mechanical properties.

The resin composition of the present invention contains the filler (D) in an amount of preferably 1 part by mass or more, more preferably 3 parts by mass or more, and further preferably 5 parts by mass or more, based on the total content of the polyolefin resin (A), the acid-modified polyolefin resin (B), and the adhesion-imparting agent (C) taken as 100 parts by mass. The content of the filler (D) equal to or greater than the above lower limit increases the water vapor barrier property of the resin composition. In addition, the resin composition can have enhanced mechanical properties, and the shear bond strength can be improved. The content of the filler (D) is preferably 13 parts by mass or less, more preferably 10 parts by mass or less, and further preferably 8 parts by mass or less. The content of the filler (D) equal to or less than the above upper limit enables high adhesiveness.

The particle diameter (D50) of the filler (D) used in the resin composition of the present invention is not particularly limited, and the diameter may be within the range of from 1 $\mu$m to 100 $\mu$m. The particle diameter (D50) can be generally measured by a laser diffraction method and dynamic light scattering.

<Resin composition>

The resin composition of the present invention contains at least the polyolefin resin (A), the acid-modified polyolefin resin (B), the adhesion-imparting agent (C), and the filler (D). The resin composition may further contain additives such as an antioxidant, if needed.

The resin composition of the present invention desirably has a melt viscosity at 230°C of from 5 dPa·s to 1000 dPa·s. The resin composition can have a melt viscosity within the above range by appropriately adjusting the types and the blending ratios of the polyolefin resin (A), the acid-modified polyolefin resin (B), the adhesion-imparting agent (C), and the filler (D). The melt viscosity at 230°C is a value measured as follows. That is, the melt viscosity is a measured value of the viscosity when the resin composition, which is dried to have a water content of 0.1% or less and then heated and stabilized at 230°C, is passed through a die having an orifice diameter of 1.0 mm and a thickness of 10 mm at a pressure of 98 N/cm$^2$ using a flow tester (model: CFT-500C, manufactured by SHIMADZU CORPORATION). A high melt viscosity of 1000 dPa·s or more allows a resin composition to have high cohesive force and durability, but such a resin composition requires injection molding at a high pressure to seal parts with complicated geometry, which may cause breaking of the parts. Conversely, a resin composition having a melt viscosity of 1000 dPa·s or less, preferably 900 dPa·s or less, can be injected at a relatively low pressure of from 0.1 MPa to 20 MPa, allowing a product to have high electrical insulating property without imparting other characteristics. The resin composition preferably has a low melt viscosity at 230°C from the viewpoint of resin injection operation, and the lower limit of the melt viscosity at 230°C is preferably 5 dPa·s or more, more preferably 10 dPa·s or more, further preferably 30 dPa·s or more, and most preferably 50 dPa·s or more from the viewpoint of the adhesiveness and the cohesive force of the resin composition.

The resin composition of the present invention may further contain an antioxidant. The antioxidant used in the present invention is not particularly limited as long as the antioxidant can prevent oxidization of the polyolefin resin (A), and an antioxidant of a hindered phenol type, an antioxidant of a phosphorus type, and an antioxidant of a thioether type may be used. Examples of the antioxidant include antioxidants of a hindered phenol type such as 1,3,5-tris(3,5-di-t-butyl-4-hydroxybenzyl)isocyanurate, 1,1,3-tri(4-hydroxy-2-methyl-5-t-butylphenyl)butane, 1,1-bis(3-t-butyl-6-methyl-4-hydroxyphenyl)butane, 3,5-bis(1,1-dimethylethyl)-4-hydroxybenzene propanoic acid, pentaerythrityl tetrakis(3,5-di-t-butyl-4-hydroxyphenyl)propionate, 3-(1,1-dimethylethyl)-4-hydroxy-5-methylbenzene propanoic acid, 3,9-bis[1,1-dimethyl-2-[(3-t-butyl-4-hydroxy-5-methylphenyl)propionyoxy]ethyl]-2,4,8,10-tetraoxaspiro[5.5]undecane and 1,3,5-trimethyl-2,4,6-tris(3',5'-di-t-butyl-4'-hydroxybenzyl)benzene; antioxidants of a phosphorus type such as 3,9-bis(p-nonylphenoxy)-2,4,8,10-tetraoxa-3,9-diphosphaspiro[5.5]undecane, 3,9-bis(octadecyloxy)-2,4,8,10-tetraoxa-3,9-diphosphaspiro[5.5]undecane, tri(monononylphenyl) phosphite, triphenoxy phosphine, isodecyl phosphite, isodecylphenyl phosphite, diphenyl 2-ethylhexyl phosphite, dinonylphenyl bis(nonylphenyl)ester phosphorus acid, 1,1,3-tris(2-methyl-4-ditri-decylphosphite-5-t-butylphenyl)butane, tris(2,4-di-t-butylphenyl phosphite), pentaerythritol bis(2,4-di-t-butylphenyl phosphite), 2,2'-methylenebis(4,6-di-t-butylphenyl)2-ethylhexyl phosphite and bis(2,6-di-t-butyl-4-methylphenyl)pentaerythritol diphosphite; and antioxidants of a thioether type such as 4,4'-thiobis[2-t-butyl-5-methylphenol] bis[3-(dodecylthio)propionate], thiobis[2-(1,1-dimethylethyl)-5-methyl-4,1-phenylene]bis[3-(tetradecylthio)propionate], pentaerythritol tetrakis(3-n-dodecyl thiopropionate), and bis(tridecyl)thiodipropionate. These may be used alone or in combination of two or more.

The resin composition contains the antioxidant in an amount of preferably 0.1 parts by mass or more, more preferably 0.2 parts by mass or more, and further preferably 0.3 parts by mass or more, based on the total content of the polyolefin resin (A), the acid-modified polyolefin resin (B), and the adhesion-imparting agent (C) taken as 100 parts by mass. Too low content of the antioxidant may worsen long-term durability at high temperatures. The content is preferably 5 parts by mass or less, more preferably 3 parts by mass or less, and further preferably 1 part by mass or less. Too high content of the antioxidant may worsen the adhesiveness and flame resistance.

The resin composition of the present invention may further contain other resins such as polyamide, polycarbonate, acryl, and ethylene vinyl acetate; curing agents such as isocyanate compounds and melamine; pigments such as a carbon black and a titanium oxide; and flame-retarding agents such as antimony trioxide and brominated polystyrene, which do not correspond to the polyolefin resin (A), the acid-modified polyolefin resin (B), the adhesion-imparting agent (C), and the filler (D), to the extent that the effect of the present invention is not impaired. The resin composition may have improved adhesiveness, flexibility, and durability by containing these components. When such components are used, the content of the polyolefin resin (A) is preferably from 20% by mass to 50 % by mass, and more preferably from 30% by mass to 50% by mass with respect to the whole resin composition of the present invention. Too low content of the polyolefin resin (A) may reduce the excellent water vapor barrier property and durability inherent in the polyolefin resin (A), and too high content of the polyolefin resin (A) may reduce the flexibility and the adhesiveness.

When the resin composition of the present invention is required to have weather resistance, the resin composition preferably contains a light stabilizer. For example, a benzotriazole-type light stabilizer, a benzophenone-type light stabilizer, a hindered amine-type light stabilizer, a nickel-type light stabilizer, and a benzoate-type light stabilizer may be used. Examples of the light stabilizer include benzotriazole-type light stabilizers such as 2-(3,5-di-tert-amyl-2'-hydroxyphenyl)benzotriazole, 2-(2-hydroxy-5-tert-octylphenyl)benzotriazole, 2-(2'-hydroxy-3'-tert-butyl-5'-methylphenyl)-5-chlorobenzotriazole, 2-(2H-benzotriazole-2-yl)-p-cresol, 2-(2'-hydroxy-5'-methylphenyl)benzotriazole, 2,4-di-tert-butyl-6-(5-chlorobenzotriazol-2-yl)phenol, and 2-[2-hydroxy-3,5-di(1,1-dimethylbenzyl)]-2H-benzotriazole; benzophenone-type light stabilizers such as 2-hydroxy-4-(octyloxy)benzophenone, 2,4-dihydroxybenzophenone, 2-hydroxy-4-methoxybenzophenone, 2-hydroxy-4-methoxybenzophenone, 2-hydroxy-4-methoxybenzophenone-5-sulfonic acid, 2-hydroxy-4-n-dodecyloxybenzophenone, bis(5-benzoyl-4-hydroxy-2-methoxyphenyl)methane, 2,2'-dihydroxy-4-methoxybenzophenone, and 2,2'-dihydroxy-4,4'-dimethoxybenzophenone; hindered amine-type light stabilizers such as bis(2,2,6,6-tetramethyl-4-piperidyl)sebacate, a polycondensate of dimethyl succinate with 1-(2-hydroxyethyl)-4-hydroxyl-2,2,6,6-tetramethylpiperidine, poly[{6-(1,1,3,3-tetramethylbutyl)amino-1,3,5-triazin-2,4-diyl}{(2,2,6,6-tetramethyl-4-piperidyl)imino}hexamethylene (2,2,6,6-tetramethyl-4-piperidyl)iminol], 1,3,5-tris(3,5-di-tert-butyl-4-hydroxybenzyl)-s-triazin-2,4,6(1H,3H,5H)trione, and tris(4-tert-butyl-3-hydroxy-2,6-dimethylbenzyl)-s-triazin-2,4,6(1H,3H,5H)trione; nickel-type light stabilizers such as [2,2'-thiobis(4-tert-octylphenolate)]-2-ethylhexylamine-nickel-(II), nickel dibutyldithiocarbamate, and [2,2'-thio-bis(4-tert-octylphenolate)]n-butylamin-nickel; and benzoate-type light stabilizers such as 2,4-di-tert-butylphenyl-3,5'-di-tert-butyl-4'-hydroxybenzoate. These light stabilizers may be used alone or in combination of two or more. If the light stabilizer is added, the amount of the light stabilizer added is preferably 0.1% by mass or more and 5% by mass or less with respect to the total resin composition. The content of the light stabilizer of less than 0.1% by mass may lead to insufficient weather resistance, while the content of more than 5% by mass may worsen the adhesiveness.

<Hot melt adhesive composition>

The resin composition of the present invention can be used as a hot melt adhesive composition. The hot melt adhesive composition can be suitably used, for example, as a sealing material for electric and electronic parts. As a specific use of the hot melt adhesive composition, the resin composition of the present invention can be injected into a metal mold in which a product requiring waterproofness is set to obtain a molded article in which the product is sealed. More specifically, if a screw-type applicator for hot-melt molding process is used, a molded article can be obtained by heating and melting the resin composition of the present invention at a temperature within a range of from around 180°C to 250°C, injecting the molten resin into a metal mold from an injection nozzle, cooling the injected rein for a predetermined period of time, and removing the resulting molded article from the metal mold.

The type of an applicator for hot-melt molding process is not particularly limited, and is exemplified by a vertical extrusion molding machine IMC-18F9 manufactured by Imoto Seisakusho and a hybrid compact vertical injection molding machine STX20 manufactured by NISSEI PLASTIC INDUSTRIAL CO., LTD.

The present application claims benefit of priority to Japanese Patent Application No. 2022-093160 filed on June 8, 2022. The entire contents of the specification of Japanese Patent Application No. 2022-093160 filed on June 8, 2022, are incorporated herein by reference.

EXAMPLES

The present invention will be further described with Examples and Comparative Examples, and the present invention is not limited by Examples. The measured values described in Examples and Comparative Examples are results of measurement conducted according to the following methods.

<Measurement of melting point and glass transition temperature>

In an aluminum sample pan, 5 mg of the measurement sample was placed, then the sample pan was hermetically sealed with a lid, and set in a differential scanning calorimeter (model: DSC220, manufactured by Seiko Electronic Industry). Subsequently, the sample pan containing the sample was heated up to 230°C at a temperature rise rate of 20°C/min for melting the sample, cooled to -130°C at a rate of 20°C/min using liquid nitrogen, then held for 5 minutes, and measurement was conducted during reheating from -130°C to 230°C at a temperature rise rate of 20°C/min. In the resulting DSC curve shown in Fig. 1, a tangent line (1) was obtained from the base line before the inflection point and a tangent line (2) was obtained from the base line after the inflection point. The intersection of the tangent lines was determined as a glass transition temperature (Tg), and the temperature corresponding to the minimum point (marked "x" in the drawing) of the endothermic peak was determined as a melting point (Tm).

<Melt properties>

The cylinder of a flow tester (model: CFT-500C, manufactured by SHIMADZU CORPORATION), which was located in the center of the heating unit set at 230°C, was filled with a sample of a resin composition dried to have a water content of 0.1% or less. One minute after filling, a load was applied to the sample through a plunger, and a molten resin sample was extruded from a die (orifice diameter: 1.0 mm, thickness: 10 mm), which was located at the bottom of the cylinder, with a pressure of 98 N/cm$^2$. The plunger travel distance and the travel time were recorded to determine a melt viscosity at 230°C. The melt properties (flowability) were evaluated from the melt viscosity in accordance with the following criteria.

Evaluation criteria
Good: A melt viscosity of 5 dPa·s or more and less than 800 dPa·s
Acceptable: A melt viscosity of 800 dPa·s or more and less than 1000 dPa·s
Bad: A melt viscosity of 1000 dPa·s or more

<Water vapor barrier property>

A resin composition was heat pressed and made into a resin film having a thickness of approximately 120 μm using a tabletop test press (model: SA-303, manufactured by TESTER SANGYO CO., LTD.). Conditions for heat pressing included a pressing temperature of 200°C, a pressing pressure of 10 MPa, and pressing time of 30 seconds. From the film formed by heat pressing, a test piece was cut out using a cutting machine in accordance with JIS Z 0208:1976. Subsequently, the test piece of the film was set to a jig and a fixture tool specified in JIS Z 0208:1976, and the test piece was placed in an environment at 25°C and 90% of relative humidity (RH) for totally 96 hours. The test piece was removed from the equipment to measure its mass 24, 48, 72, and 96 hours after the start of the test. The water vapor transmission rates (water vapor barrier property) between 24 hours and 48 hours, 48 hours and 72 hours, and 72 hours and 96 hours after the start were calculated from the mass of water absorbed by calcium chloride during the periods of time, and the average of the three water vapor transmission rates was determined as a water vapor transmission rate of the resin composition. The water vapor transmission rate was determined according to the following equation.

$$\text{Water vapor transmission rate } (g/(m^2 \cdot 24h)) = (240 \times m)/(t \times s)$$

m: A total mass increase between the last two times of the measurement (mg)
t: Total measurement hours between the last two times of the measurement (h)
s: A moisture permeation area (cm$^2$)
Evaluation criteria
Good: A water vapor transmission rate of less than 1.0 (g/(m$^2$·24h))
Acceptable: A water vapor transmission rate of 1.0 (g/(m$^2$·24h)) or more and less than 1.5 (g/(m$^2$· 24h))
Bad: A water vapor transmission rate of 1.5 (g/(m$^2$·24h)) or more

<Adhesiveness test (shear bond strength)>

**EP 4 538 323 A1**

Method for preparing test piece for shear bond strength measurement

From a substrate (aluminum substrate: A5052, thickness: 0.5 mm), two pieces were cut out: one piece with dimensions of 70 mm × 25 mm and another piece with dimensions of 40 mm × 25 mm, and the surfaces of the pieces were wiped with acetone to remove oil. Then the pieces were fixed inside of a metal mold for shear bond strength test so that the aluminum surfaces of the pieces would contact the molten resin composition, the pieces would overlap by 10 mm, the test piece would have a width of 25 mm, and the molded resin composition would have a thickness of 1 mm. Subsequently, the resin composition having a water content of 0.1% or less was injected between the pieces using a screw-type applicator for hot-melt molding process (a vertical low-pressure extrusion molding machine, model: IMC-18F9, manufactured by Imoto machinery Co., LTD) and molded. The molding conditions included a resin molding temperature of 240°C, a molding pressure of 4.0 MPa, a holding pressure of 4.0 MPa, holding time of 20 seconds, and a discharge rotation of 80% (with respect to the maximum discharge of 100%). The article obtained through the molding was removed from the metal mold, and the test piece for shear bond strength in which the two pieces of the substrate sandwiched the molded resin (substrate/resin composition layer/substrate) was obtained.

Method for testing shear bond strength

The above test piece for shear bond strength was stored in an atmosphere of 23°C and a relative humidity of 50% for 24 hours. The shear bond strength was measured using an autograph (model: AG-IS, manufactured by SHIMADZU CORPORATION) by gripping each of the substrates with a chuck and delaminating the resin composition layer in the shear direction. The tensile rate was 50 mm/min.

Evaluation criteria
Good: A shear bond strength of 2.0 MPa or more
Acceptable: A shear bond strength of 1.0 MPa or more and less than 2.0 MPa
Bad: A shear bond strength of less than 1.0 MPa

<Examples 1 to 11 and Comparative Examples 1 to 5>

The polyolefin resin (A), the acid-modified polyolefin resin (B), the adhesion-imparting agent (C), and the filler (D) satisfying the ratios in Table 1 were melted and kneaded using a biaxial extruder at a die temperature of from 160°C to 220°C to obtain resin compositions (S-1) to (S-16). The melt properties, water vapor barrier property, and shear bond strength of the resin compositions were evaluated according to the methods described above. The evaluation results are presented in Table 1.

[Table 1]

| | | | Examples | | | | | | | | | | | Comparative Examples | | | | |
|---|---|---|---|---|---|---|---|---|---|---|---|---|---|---|---|---|---|---|
| | | | 1 | 2 | 3 | 4 | 5 | 6 | 7 | 8 | 9 | 10 | 11 | 1 | 2 | 3 | 4 | 5 |
| Resin compositions | | | S-1 | S-2 | S-3 | S-4 | S5 | S-6 | S-7 | S-8 | S-9 | S-10 | S-11 | S-12 | S-13 | S-14 | S-15 | S-16 |
| Blend (parts by mass) | Polyolefin resin (A) | (A-1) | 30 | 35 | 35 | 35 | 20 | 35 | 45 | 35 | 35 | 35 | 45 | 45 | 45 | 50 | 25 | 35 |
| | | (A-2) | 25 | 30 | 30 | | | 30 | 15 | 30 | 30 | 30 | 15 | 15 | 15 | 25 | 10 | 30 |
| | | (A-3) | | | | 30 | 45 | | | | | | | | | | | |
| | Acid-modified polyolefin resin (B) | (B-1) | 5 | 5 | | 5 | 5 | 5 | 15 | 5 | 5 | 5 | 15 | 15 | 15 | 20 | | 5 |
| | | (B-2) | | | 5 | | | | | | | | | | | | 5 | |
| | Adhesion-imparting agent (C) | (C-1) | 40 | 30 | 30 | 30 | 30 | | 25 | 30 | 30 | 30 | 25 | 25 | 25 | 5 | 60 | 30 |
| | | (C-2) | | | | | | 30 | | | | | | | | | | |
| | Filler (D) | D-1) | 5 | 5 | 5 | 5 | 5 | 5 | 5 | | 3 | 10 | | | 15 | 5 | 5 | |
| | | (D-2) | | | | | | | | 5 | | | | | | | | |
| | | (D-3) | | | | | | | | | | | 5 | | | | | |
| | | (D-4) | | | | | | | | | | | | | | | | 5 |
| Properties | Melt properties | Melt viscosity (dPa·s) | 592 Good | 813 Acceptable | 780 Good | 860 Acceptable | 962 Acceptable | 820 Acceptable | 639 Good | 990 Acceptable | 790 Good | 880 Acceptable | 771 Good | 598 Good | 960 Acceptable | 1321 Bad | 420 Good | 850 Acceptable |
| | Water vapor barrier property | Water vapor transmission rate (g/(m$^2$·24h)) | 0.71 Good | 0.73 Good | 0.97 Good | 0.29 Good | 1.29 Acceptable | 1.48 Acceptable | 0.75 Good | 0.97 Good | 0.93 Good | 0.68 Good | 0.54 Good | 2.35 Bad | 0.37 Good | 0.98 Good | 2.22 Bad | 3.78 Bad |
| | Adhesiveness | Shear bond strength (MPa) | 3.2 Good | 3.1 Good | 2.1 Good | 3.4 Good | 3.8 Good | 3.5 Good | 2.9 Good | 2.3 Good | 3.3 Good | 2.0 Good | 3.0 Good | 3.2 Good | 0 Bad | 0.1 Bad | 0.5 Bad | 2.2 Good |

The polyolefin resins, the acid-modified polyolefin resins, the adhesion-imparting agents, and the fillers shown in Table 1 are as follows.

Polyolefin resin (A-1): a homopolypropylene resin (type: J107G, manufactured by Prime Polymer Co., Ltd.) with a melting point of 165°C and a density of 0.90 g/cm$^3$

Polyolefin resin (A-2): an ethylene/$\alpha$-olefin copolymer (type: EUL731, manufactured by Sumitomo Chemical Co., Ltd.) with a melting point of from 113°C to 117°C and a density of 0.90 g/cm$^3$

Polyolefin resin (A-3): a propylene/$\alpha$-olefin copolymer (type: TAFMER-PN-20300, manufactured by Mitsui Chemicals, Inc.) with a melting point of 160°C and a density of 0.87 g/cm$^3$

Acid-modified polyolefin resin (B-1): an acid-modified polypropylene resin (type: PMA H1100P, manufactured by TOYOBO CO., LTD.) with a melting point of 147°C and a molecular weight Mw of 74000

Acid-modified polyolefin resin (B-2): an acid-modified polypropylene resin (type: PMA F2, manufactured by TOYOBO CO., LTD.) with a melting point of 120°C and a molecular weight Mw of 70000

Adhesion-imparting agent (C-1): a terpene-modified phenolic resin (type: YS POLYSTER T160, manufactured by YASUHARA CHEMICAL CO., LTD.) with a hydroxyl value of 60 KOHmg/g

Adhesion-imparting agent (C-2): a terpene-modified phenolic resin (type: YS POLYSTER G150, manufactured by YASUHARA CHEMICAL CO., LTD.) with a hydroxyl value of 140 KOHmg/g

Filler (D-1): talc (type: K-1, manufactured by NIPPON TALC CO., LTD.) with a plate shape and a particle diameter (D50) of 8.0 $\mu$m

Filler (D-2): montmorillonite (type: I.44P, manufactured by Volclay Japan Co., Ltd.) with a plate shape and a size of from 14 $\mu$m to 18 $\mu$m

Filler (D-3): montmorillonite (type: BYK-MAX CT 4255, manufactured by BYK-Chemie Japan) with a plate shape and a particle diameter (D50) of less than 40 $\mu$m

Filler (D-4): glass beads (type: UBS-0005E, manufactured by UNITIKA LTD.) with a spherical shape and a particle diameter of 5 $\mu$m or less

As shown in Table 1, the resin compositions in Examples 1 to 11 had a high water vapor barrier property, a high shear bond strength, and excellent melt properties. In contrast, the resin composition in Comparative Example 1 contained no filler, and the resulting resin composition had low water vapor barrier property. The resin composition in Comparative Example 2 contained a large amount of filler, and the resulting resin composition did not have adhesiveness. The resin composition in Comparative Example 3 contained a small amount of adhesion-imparting agent, resulting in increased melt viscosity and thus low adhesiveness. The resin composition in Comparative Example 4, which contained too large amount of adhesion-imparting agent, conversely showed decreased adhesiveness, and showed decreased water vapor barrier property. The resin composition in Comparative Example 5 contained a spherical filler, resulting in decreased water vapor barrier property.

INDUSTRIAL APPLICABILITY

The resin composition of the present invention has a low melt viscosity when molded into a product, a high adhesiveness to an aluminum substrate, and a high water vapor barrier property; therefore, the resin composition can be advantageously used as a hot melt adhesive composition in waterproofing applications.

## Claims

1. A resin composition comprising:

   a polyolefin resin (A);
   an acid-modified polyolefin resin (B);
   an adhesion-imparting agent (C); and
   a filler (D),
   wherein the resin composition comprises 10 parts by mass to 50 parts by mass of the adhesion-imparting agent (C) and 1 part by mass to 13 parts by mass of the filler (D), based on a total content of the polyolefin resin (A), the acid-modified polyolefin resin (B), and the adhesion-imparting agent (C) taken as 100 parts by mass; and
   the filler (D) has a plate shape.

2. The resin composition according to claim 1, wherein the polyolefin resin (A) contains a polypropylene resin and further contains at least one of an ethylene/$\alpha$-olefin copolymer and a propylene/$\alpha$-olefin copolymer.

3. The resin composition according to claim 1 or 2, wherein the acid-modified polyolefin resin (B) has a melting point of 100°C or higher.

4. The resin composition according to claim 1 or 2, wherein the adhesion-imparting agent (C) has a hydroxyl value of from 1 KOHmg/g to 100 KOHmg/g.

5. The resin composition according to claim 1 or 2, wherein the resin composition comprises 49 parts by mass to 70 parts by mass of the polyolefin resin (A) and 1 part by mass to 30 parts by mass of the acid-modified polyolefin resin (B), based on the total content of the polyolefin resin (A), the acid-modified polyolefin resin (B), and the adhesion-imparting agent (C) taken as 100 parts by mass.

6. A hot melt adhesive composition comprising the resin composition according to claim 1 or 2.

[Fig. 1]

## INTERNATIONAL SEARCH REPORT

| International application No. |
|---|
| **PCT/JP2023/020946** |

### A. CLASSIFICATION OF SUBJECT MATTER

*C08L 23/02*(2006.01)i; *C08K 3/013*(2018.01)i; *C08L 23/08*(2006.01)i; *C08L 23/12*(2006.01)i; *C08L 23/14*(2006.01)i; *C08L 23/26*(2006.01)i; *C09J 11/04*(2006.01)i; *C09J 123/02*(2006.01)i; *C09J 123/08*(2006.01)i; *C09J 123/12*(2006.01)i; *C09J 123/14*(2006.01)i; *C09J 123/26*(2006.01)i

FI: C08L23/02; C08K3/013; C08L23/14; C08L23/08; C08L23/12; C08L23/26; C09J123/02; C09J123/26; C09J123/14; C09J123/08; C09J123/12; C09J11/04

According to International Patent Classification (IPC) or to both national classification and IPC

### B. FIELDS SEARCHED

Minimum documentation searched (classification system followed by classification symbols)

C08L; C09J

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 52-71547 A (BANDO CHEMICAL INDUSTRIES, LTD.) 15 June 1977 (1977-06-15) claims, page 2, upper left column, line 20 to lower left column, line 5, page 3, upper right column to lower left column, line 2, example 5 | 1-6 |
| Y | JP 2012-180385 A (TOYOBO CO., LTD.) 20 September 2012 (2012-09-20) paragraphs [0045], [0075] | 1-6 |
| Y | JP 2013-60539 A (TOYOBO CO., LTD.) 04 April 2013 (2013-04-04) paragraphs [0031], [0032] | 1-6 |
| Y | JP 2017-71147 A (SUMITOMO BAKELITE CO., LTD.) 13 April 2017 (2017-04-13) claims | 1-6 |
| Y | JP 2007-197517 A (THREE M INNOVATIVE PROPERTIES CO.) 09 August 2007 (2007-08-09) claims, paragraphs [0036], [0037] | 1-6 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 August 2023** | **29 August 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
|---|
| **PCT/JP2023/020946** |

**C.    DOCUMENTS CONSIDERED TO BE RELEVANT**

| Category* | Citation of document, with indication, where appropriate, of the relevant passages | Relevant to claim No. |
|---|---|---|
| Y | JP 2000-178524 A (MITSUBISHI CHEMICALS CORP.) 27 June 2000 (2000-06-27) claims, paragraphs [0001], [0012], [0024], [0026], example 3 | 1-6 |
| Y | JP 9-241443 A (MITSUBISHI CHEMICALS CORP.) 16 September 1997 (1997-09-16) claims, paragraphs [0001], [0011], [0014], [0024], [0033], example 4 | 1-6 |
| Y | JP 10-151707 A (KURARAY CO., LTD.) 09 June 1998 (1998-06-09) claims, paragraphs [0077]-[0079] | 1-6 |
| Y | JP 2000-79956 A (TOPPAN PRINTING CO., LTD.) 21 March 2000 (2000-03-21) paragraph [0025] | 1-6 |
| Y | JP 2000-303387 A (GOYO PAPER WORKING CO., LTD.) 31 October 2000 (2000-10-31) claims, paragraphs [0011], [0015], [0016], examples 1, 3 | 1-6 |
| Y | JP 6-65554 A (MITSUI PETROCHEM. IND., LTD.) 08 March 1994 (1994-03-08) claims, paragraphs [0009], [0010], [0012], [0023], [0026], example 1 | 1-6 |
| A | JP 2017-36354 A (FUJIMORI KOGYO CO., LTD.) 16 February 2017 (2017-02-16) paragraph [0025] | 1-6 |

Form PCT/ISA/210 (second sheet) (January 2015)

**INTERNATIONAL SEARCH REPORT**
Information on patent family members

International application No.

**PCT/JP2023/020946**

| Patent document cited in search report | | | Publication date (day/month/year) | Patent family member(s) | Publication date (day/month/year) |
|---|---|---|---|---|---|
| JP | 52-71547 | A | 15 June 1977 | (Family: none) | |
| JP | 2012-180385 | A | 20 September 2012 | (Family: none) | |
| JP | 2013-60539 | A | 04 April 2013 | (Family: none) | |
| JP | 2017-71147 | A | 13 April 2017 | (Family: none) | |
| JP | 2007-197517 | A | 09 August 2007 | US 2009/0026934 A1 claims, paragraphs [0053], [0054] WO 2007/087281 A1 EP 1976952 A1 KR 10-2008-0088606 A CN 101370889 A | |
| JP | 2000-178524 | A | 27 June 2000 | (Family: none) | |
| JP | 9-241443 | A | 16 September 1997 | (Family: none) | |
| JP | 10-151707 | A | 09 June 1998 | US 5972447 A claims, column 13, line 63 to column 14, line 25 EP 832928 A2 | |
| JP | 2000-79956 | A | 21 March 2000 | (Family: none) | |
| JP | 2000-303387 | A | 31 October 2000 | EP 1125980 A1 claims, paragraphs [0025], [0026], [0036]-[0042], examples 1, 3 CN 1319119 A KR 10-2001-0074746 A | |
| JP | 6-65554 | A | 08 March 1994 | (Family: none) | |
| JP | 2017-36354 | A | 16 February 2017 | US 2019/0001634 A1 paragraph [0036] | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004210893 A
- JP 2022 A
- JP 093160 A
- JP 2022093160 A